# EUROPEAN PATENT APPLICATION

(11) **EP 2 271 123 A2**
(43) Date of publication of application: **05.01.2011**
(21) Application number: 10167076.8
(22) Date of filing: 23.06.2010
(51) Int. Cl.: H04N 13/00, G01C 11/06, G06T 7/00

(54) **Apparatus acquiring 3D distance information and image**

(30) Priority: 29.06.2009 KR 20090058146
(71) Applicant: SiliconFile Technologies Inc., Seoul (KR)
(72) Inventor: Lee, Byoung Su, Jeollanam-do (KR)
(74) Representative: Neobard, William John

(57) **Abstract**

An apparatus for acquiring distance information and images includes an image sensor unit including a left image sensor, a central image sensor, and a right image sensor, which are arranged on one board while being spaced apart from one another at a predetermined interval, and a distance information extraction unit that extracts distance information by comparing an image of a reference object acquired through the central image sensor with an image of the reference object acquired through the left image sensor and an image of the reference object acquired through the right image sensor.

## Description

The present invention relates generally to the field of acquisition of images and of distance information. An embodiment relates to an apparatus for acquiring distance and images, and more particularly, to an apparatus for acquiring three-dimensional distance information and images, which can extract distance information on an object by comparing an image acquired through a central image sensor with images acquired through left and right image sensors and output an image at a specific position by using the extracted distance information, the central image sensor, the left image sensor, and the right image sensor being provided on one board.

With the development of information communication technology, a multimedia service supporting two-dimensional image and voice has been provided through a digital terminal that processes characters, voice and images at a high speed, and research into a three-dimensional information communication service providing a three-dimensionally realistic multimedia service has been actively conducted.

In general, a three-dimensional image having a three-dimensional effect is acquired by the principle of stereo vision through both eyes. An important factor of a three-dimensional effect is parallax of both eyes, that is, binocular parallax caused by an interval (approximately 65mm) between both eyes. Thus, a person sees different two-dimensional images through left and right eyes, the two images are transmitted to a cerebrum through the retina, and the cerebrum combines the two images to produce the original depth and actual effects of a three-dimensional image, which is generally called sterography.

Recently, research into a stereo vision system capable of detecting the distance to an object located in front of the system has been conducted. Such a stereo vision system uses two stereo cameras that maps a three-dimensional space into a two-dimensional space through prospective transformation, and recovers three-dimensional information from a geometrical arrangement of the stereo cameras.

In the conventional method for achieving distance information as described above, left-side image data and right-side image data are acquired using two cameras. The left-side image data and the right-side image data are subject to an outline detection process, and matching points between the left-side image data and the right-side image data are found, so that the distance information is acquired.

However, in the above method, complicated calculations are required for finding the same point by comparing the two images. In most cases, edges of images are extracted, corners and the like are regarded as the same point, and depth information is acquired. Since such image processing and determination of the same point and the like are complicated and are disadvantageous in terms of accuracy of distance measurement, accurate distance may not be measured and many processes for correcting the disadvantages are required.

Recently, research into wafer-level stereo cameras, which extract three-dimensional information over a short distance by processing images acquired through left and right image sensors provided on one board, has been conducted.

However, when an obstacle is located in front of such wafer-level stereo cameras, accurate distance information may not be easily extracted due to the existence of hidden objects or occlusion areas on left and right images.

Accordingly, the present invention has been made in an effort to address problems occurring in the related art. An aim of embodiments is to provide an apparatus for acquiring three-dimensional distance information and images, in which a waver-level stereo camera including a central image sensor, a left image sensor, and a right image sensor can extract accurate distance information on a reference object by comparing an image acquired through the central image sensor with images acquired through the left image sensor and the right image sensor and output an image at a specific position by using the extracted distance information.

In one aspect, there is provided an apparatus for acquiring distance information and images, including: an image sensor unit including a left image sensor, a central image sensor, and a right image sensor, which are arranged on one board while being spaced apart from one another at a predetermined interval; and a distance information extraction unit that extracts distance information by comparing an image of a reference object acquired through the central image sensor with an image of the reference object acquired through the left image sensor and an image of the reference object acquired through the right image sensor.

The apparatus may further include an image processing unit that extracts an image of the reference object at a specific position from the extracted distance information.

Since the apparatus is aligned at wafer level, a separate calibration process for alignment is not required, extraction of distance information is facilitated, and a calculation process thereof is simple.

Furthermore, the image acquired through the central image sensor is compared with the image acquired through the left image sensor and the image acquired through the right image sensor, so that accurate distance information can be extracted without hidden objects.

In the drawings:
FIG. 1 is a diagram illustrating the configuration of an apparatus for acquiring three-dimensional distance information and images embodying the present invention;
FIG. 2 is a diagram illustrating a process in which an embodiment outputs distance information and images; and
FIG. 3 is a diagram schematically illustrating a process in which an embodiment extracts an image at a specific position.

Reference will now be made in greater detail to a embodiment illustrated in the accompanying drawings.

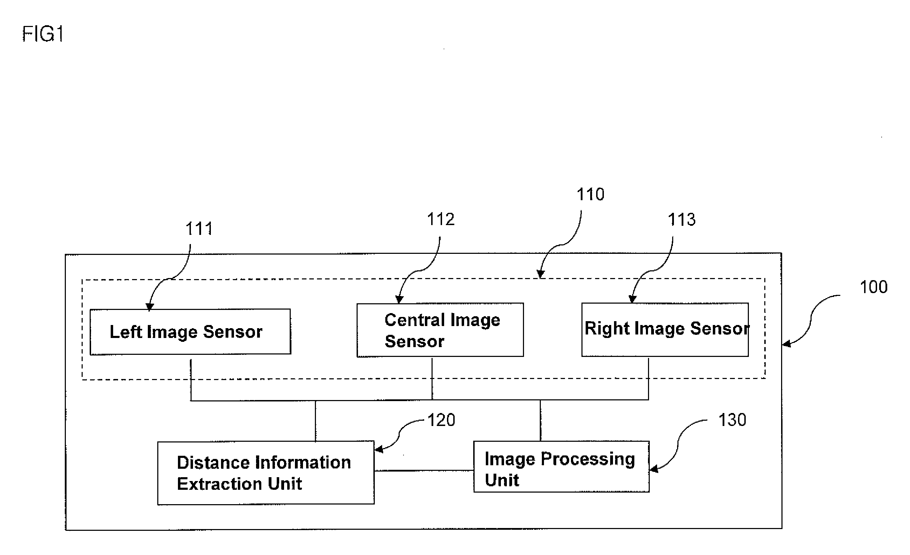

Referring to FIG. 1, the apparatus 100 for acquiring the three-dimensional distance information and images in accordance with the present invention includes an image sensor unit 110, a distance information extraction unit 120, and an image processing unit 130.

The image sensor unit 110 includes a left image sensor 111, a central image sensor 112, and a right image sensor 113, which are mounted on one board while being spaced apart from one another at a predetermined interval. The left image sensor 111, the central image sensor 112, and the right image sensor 113 acquire a left image, a central image, and a right image with respect to a reference object, respectively.

The distance information extraction unit 120 compares and matches the central image of the reference object acquired through the central image sensor 112 with the left image acquired through the left image sensor 111 and the right image acquired through the right image sensor 113, thereby extracting accurate distance information on the reference object without hidden objects.

That is, the central image is matched with the left image and the right image, so that one point on the central image is matched with at least one point of the left image or the right image, resulting in the disappearance of an uncertain area of displacement and the improvement of the accuracy of distance information.

The image processing unit 130 outputs the central image of the reference object, which is acquired through the central image sensor 112. Furthermore, the image processing unit 130 can extract an image at a specific position by using the distance information extracted by the distance information extraction unit 120, and the central image.

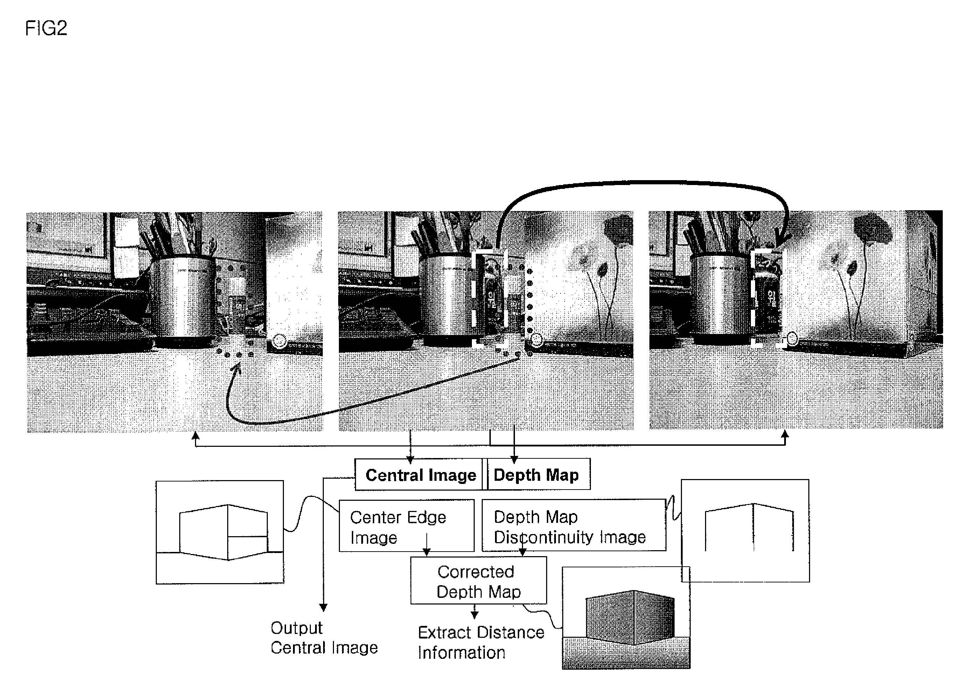

As shown in FIG. 2, one point on the central image is matched with at least one point of the left image or the right image. The central image is output to the outside of the apparatus 100 through the image processing unit 130.

Meanwhile, the central image is matched with the left image and the right image to extract the distance information on the reference object. At this time, a discontinuity image according to distance is formed on the extracted depth map. Such a depth map discontinuity image is combined with a center edge image to correct the depth map, resulting in the improvement of the accuracy of the distance information.

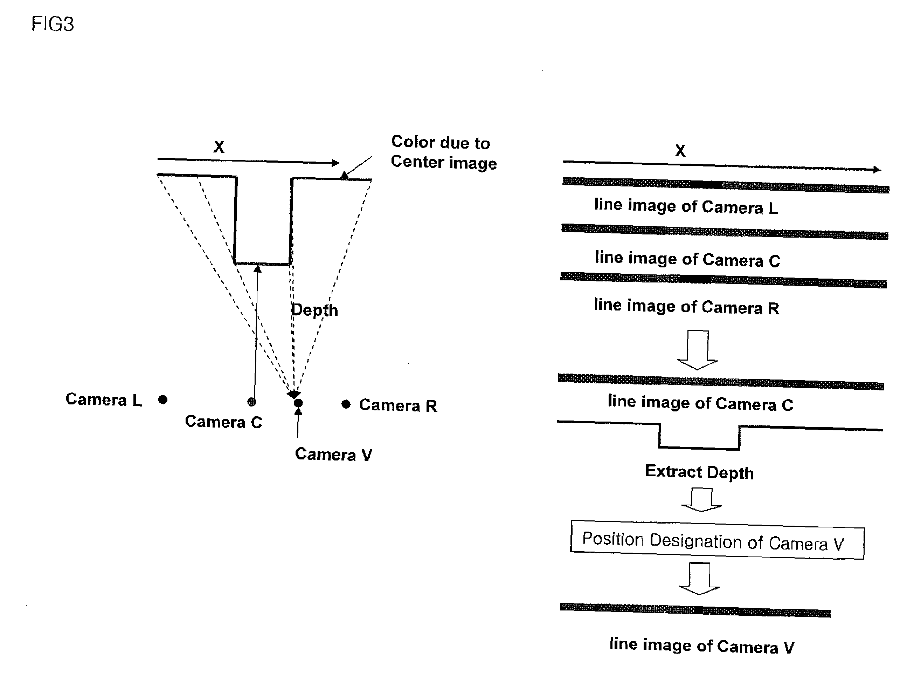

As shown in FIG. 3, a left image sensor "camera L", a central image sensor "camera C", and a right image sensor "camera R" extract line images, respectively. Next, the line image of the central image sensor "camera C" is matched with the line images of the left image sensor "camera L" and the right image sensor "camera R" to extract distance information, thereby acquiring a depth map.

Then, a virtual camera "camera V" is located at a specific view point at which an image is to be acquired, and a line image of the virtual camera "camera V" is acquired using the extracted distance information, so that an image at a specific position in the left image or the right image can be extracted.

As described above, the present invention is **characterized in that** the central image is matched with the left image and the right image to extract the distance information on the reference object, and an image at an arbitrary position in the left image or the right image is extracted from the extracted distance information.

Although an embodiment has been described for illustrative purposes, those skilled in the art will appreciate that various modifications, additions and substitutions are possible, without departing from the scope of the invention as recited in the accompanying claims.

## Claims

1. An apparatus for acquiring distance information and images, comprising:
an image sensor unit including a left image sensor, a central image sensor, and a right image sensor, which are disposed on a single board while being spaced apart from one another at a predetermined interval; and
a distance information extraction unit arranged to extract distance information by comparing an image of a reference object acquired through the central image sensor with an image of the reference object acquired through the left image sensor and an image of the reference object acquired through the right image sensor.

2. Apparatus according to claim 1, further comprising an image processing unit that is arranged to extract an image of the reference object at a specific position from the extracted distance information.

3. Apparatus according to claim 1, wherein the distance information extraction unit is arranged to correct the distance information by combining an edge image of the image acquired through the central image sensor with a depth map discontinuity image, thereby extracting corrected distance information.

4. Apparatus according to claim 2, wherein the distance information extraction unit is arranged to correct the distance information by combining an edge image of the image acquired through the central image sensor with a depth map discontinuity image, thereby extracting corrected distance information.
